# EUROPEAN PATENT SPECIFICATION

(11) **EP 4 226 225 B1**
(45) Date of publication and mention of the grant of the patent: **10.07.2024**
(21) Application number: 21782576.9
(22) Date of filing: 06.10.2021
(51) Int. Cl.: G05B 19/418, H04N 7/18, G06T 7/70

(54) **A LINE CLEARANCE SYSTEM**
LINIENABSTANDSSYSTEM
SYSTÈME DE DÉGAGEMENT DE LIGNE

(30) Priority: 07.10.2020 EP 20200652
(43) Date of publication of application: 16.08.2023
(73) Proprietor: CREST SOLUTIONS LIMITED, Co Cork, T45 X767 (IE)
(72) Inventor: TAYLOR, David, Cork T45 X767 (IE); DZINIC, Denis, Cork T45 X767 (IE)
(74) Representative: Weldon O'Brien Ltd.
(86) International application number: PCT/EP2021/077629
(87) International publication number: WO 2022/074085

(56) References cited:
- WO-A1-2017/157784
- CN-U- 202 018 553
- JP-A- 2007 166 570
- US-A1- 2011 297 590
- US-A1- 2020 177 549

## Description

### Introduction

The present invention relates to line clearance in manufacturing industry.

In regulated industries such as pharmaceutical and medical devices, automated manufacturing and packaging lines are utilised for the production of a variety of products, multiple product variations, or products that address different markets which adhere to a multitude of regulatory frameworks and language requirements. An important function in these environments is "line clearance" or "line setup", which eliminates the risk of contamination of the current product batch by components or finished product from previous manufacturing or packaging operations.

Prevention of contamination of a batch with any of the materials, product or packaging from a previous manufacturing process is difficult due to the nature of the equipment used in modern manufacturing facilities. These machines are semi-autonomous, large, complex, and for safety reasons make it challenging to access areas that may collect rogue components.

Current practice is that checking and clearing of lines is performed by a team of people using flashlights who manually investigate 'hotspot' areas and remove contaminants. The line clearance process is time-consuming, error-prone, physically arduous and potentially dangerous to those people performing the task. As production output moves towards smaller batch runs for certain markets, the frequency of line clearance increases. Also, as the complexity of the machinery and environment increases, the likelihood of rogue components being present and undetected on the line also increases.

WO2017/157784) describes a receptacle with a machine-readable unique identifier. US2011/0297590 describes an inspection system for a conveyor conveying pallet-shaped articles.

The invention addresses the problem eliminates the risk of contamination of a line by components or finished product from previous manufacturing or packaging operations.

### Summary

The invention provides a production line clearance system as set out in claim 1, and optional features in the dependent claims appended hereto.

### Detailed Description of the Invention

The invention will be more clearly understood from the following description of some embodiments thereof, given by way of example only with reference to the accompanying drawings in which:
Fig. 1 is a diagram illustrating architecture of a line clearance system of the invention, in hardware terms;
Fig. 2 shows system components including a camera and signal splitter, Fig. 3(a), is a perspective view of a camera, Fig. 3(b) is a perspective view with a distal end outer cover removed, Fig. 3(c), is a perspective view with LEDs removed, and Fig. 3(d) is a perspective view with a main housing removed, and Fig. 3(e) is an exploded view of the camera;
Fig. 4(a) is a view of the end of a cable which supplies both power and signals to each camera, Fig. 4(b) is a diagram illustrating composition of the cable, indicating how it incorporates both power and signals, and Fig. 4(c) is an end view of a terminal block feeding multiple cameras
Fig. 5 is a diagram showing a micro-services architecture of the system, with particular emphasis on the manner of processing camera images;
Fig. 6 is a flow diagram of an inspection method shown at a high level performed by the system, and Fig. 7 is a more detailed flow diagram; and

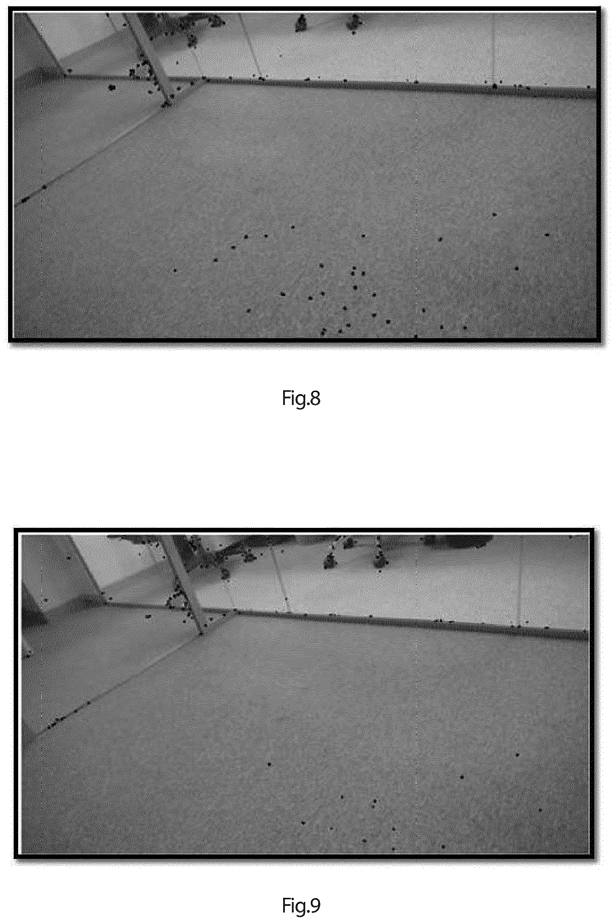

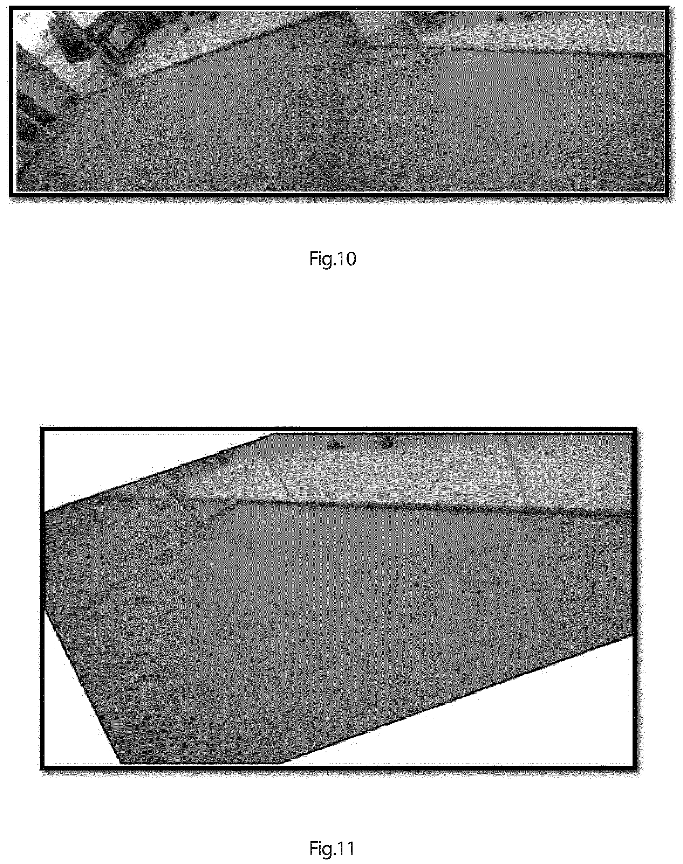

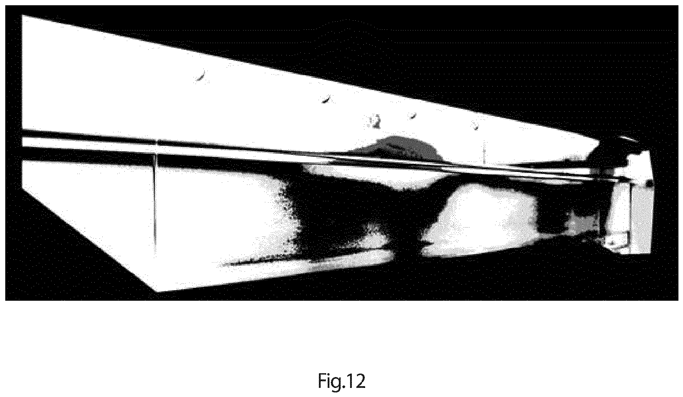

Figs 8 to 12 are example images for the example of Fig. 7.

### Detailed Description of the Embodiments

Referring to the drawings a line clearance system 1 comprises a power source 2 linked with PoE (Power over Internet) switches 3, in turn linked with IoT (Internet of Things) cameras 4. A cluster 5 comprises sidecar cameras 11 arranged in nodes 10 linked to PoE switches 3. The switches are in turn linked with servers which are accessed by client operator devices 40. As described in more detail below, at least some of the cameras are provided with power and signals/data by a single proprietary cable, and not by the PoE switches.

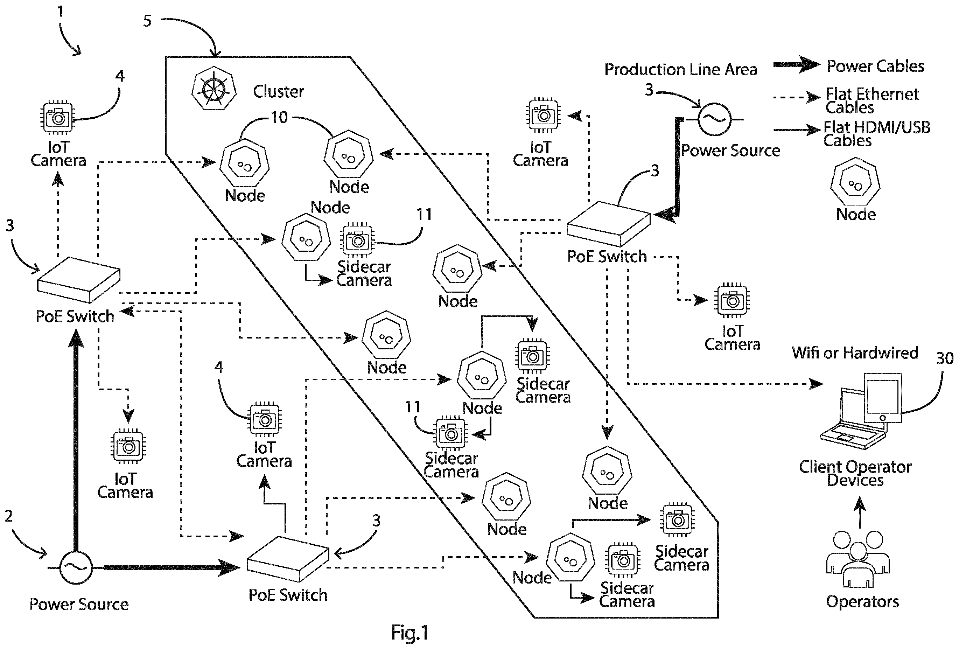

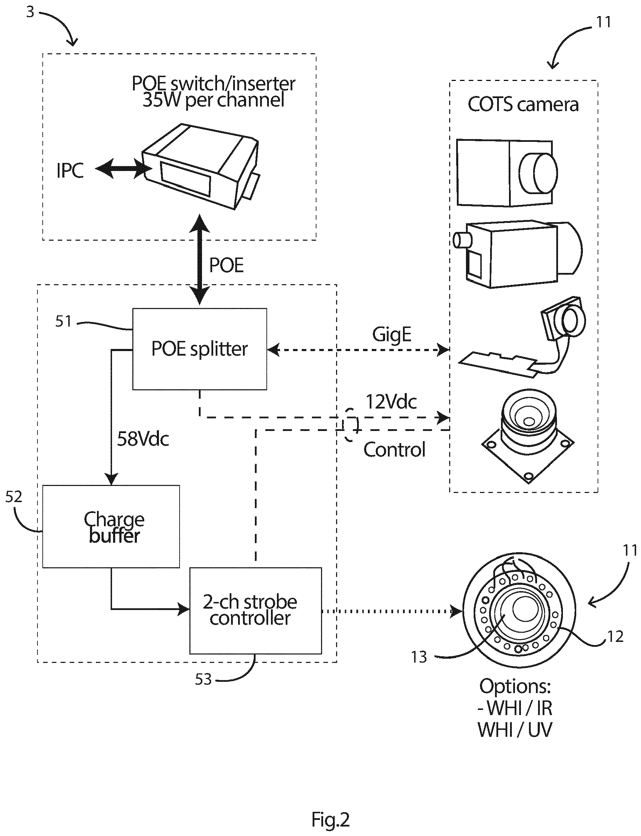

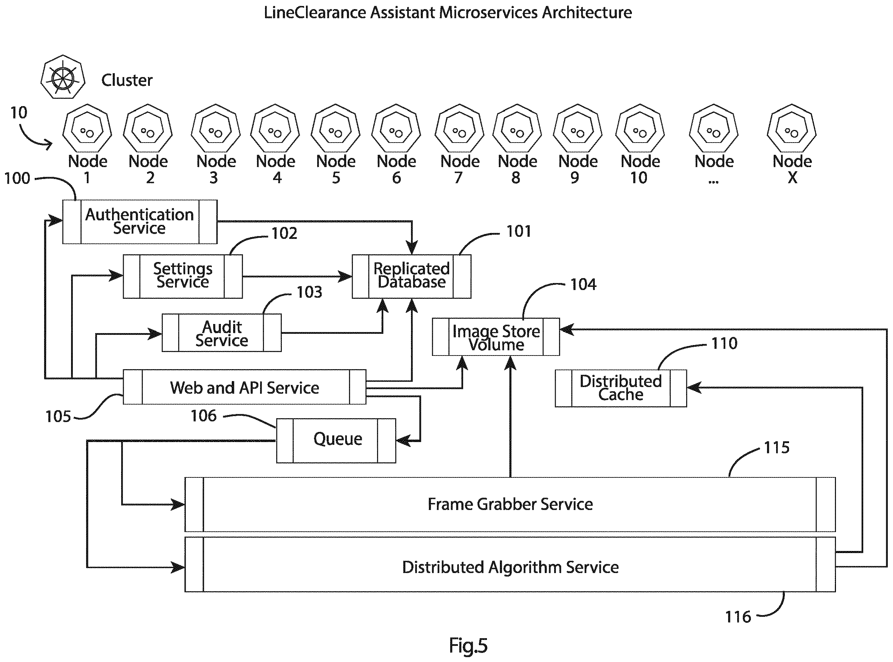

In more detail, the system comprises:
a) Connected IoT and sidecar cameras 4 and 11, mostly shown in the "cluster" portion of Fig. 1, that are located on the automated manufacturing or packaging machinery for acquiring images. The cameras are mounted and are connected at a scale capable of completing a large volume of inspection workloads in quick time. As shown in Fig. 2 a PoE switch/inserter 3 and a number of the cameras 11 are linked with a PoE splitter 51, in turn connected to a charge buffer 52 and a 2-channel strobe controller 53. At least some cameras 11 comprise removable LED rings 12 for illumination around a lens 13. The cameras are IP52 rated, with a lens and ring lighting housing. They have charge buffered light triggering and a single cable for power and data.
c) An orchestrated set of micro-services distributing the capturing and analysis of images, as shown in Fig. 5. The server software executes algorithms to provide an accurate assessment on whether rogue items or contamination appear in reference to a known good state. These run on at least one server indicted generally by the numeral 30 in Fig. 1. The servers in hardware terms are conventional.

### Camera Integrated Vision and Lighting

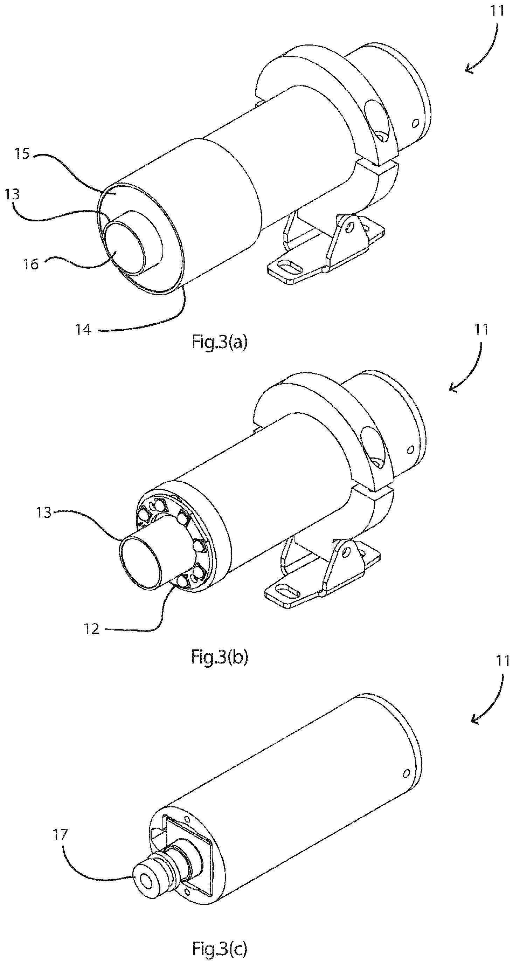

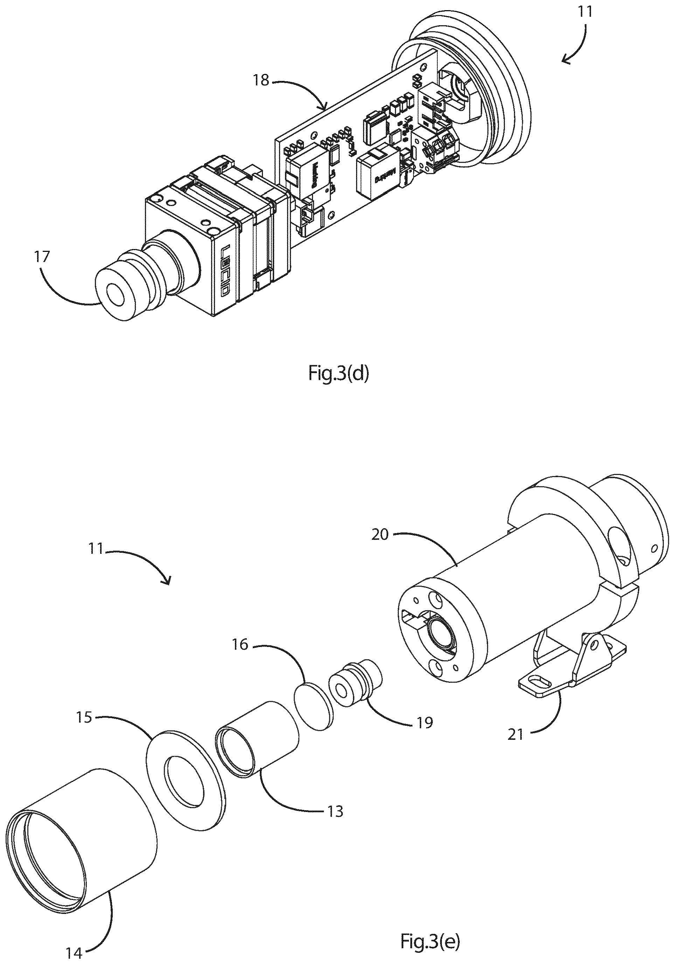

Referring to Fig. 3 each camera device (or "camera") 11 comprises a fixture 21 for securing to a non-vibrating frame at the production line, which supports a tubular main housing 20. There is a removable outer tubular housing 14 which is recessed proximally of a distal inner tubular housing 13. The outer housing 14 surrounds a removable ring 12 of LEDs of the desired wavelength such as UV. The LEDs 12 are mounted to the front of the main housing 20 in such a manner to dissipate the heat generated when the lights are illuminated. The housings 13 and 14 are of stainless steel and hence are not prone to degradation by UV light. There is an annular glass window 15 for the light emission, and a disc-shaped glass window 16 for the camera lens 17. As shown particularly in Fig. 3(d) the main housing 20 houses a drive circuit 18 which is linked by a single cable to a terminal block for delivery of signals and power to the circuit 18. The camera comprises a lens 19 is therefore in the tubular housing 13 with the transparent cover 16) at a distal end, and the outer tubular housing 14 containing the ring of LEDs 12 is proximal of the cover 16. The LEDs 12 therefore have a field of emission which surrounds the distal tubular housing 13 without being incident on the transparent cover 16, thereby avoiding glare into the lens. This is particularly important because the LEDs 12 typically need to be of a high intensity for adequate illumination in confined production line spaces. The housings being of stainless steel and the covers of glass means that the materials will not degrade due to UV light being incident on them.

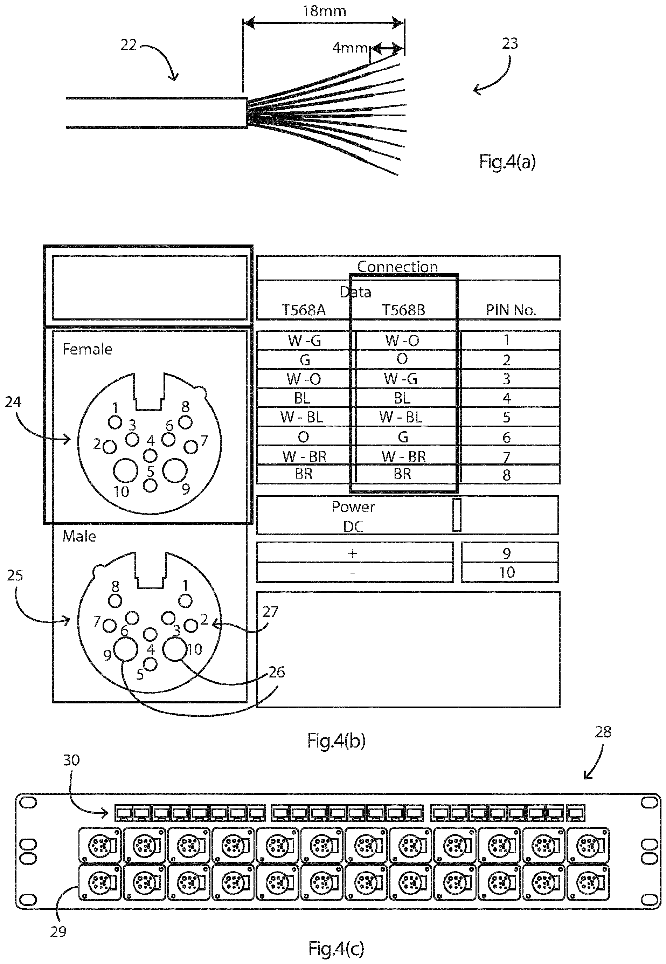

As shown in Fig 4 there is a single lead 22 to each camera 11. A particular technical problem with capturing clear images in a production or packaging line is that a considerable level of light intensity is required for sufficient illumination in the targe spaces, which may be overhung by production equipment and/or there may be poor ambient lighting. Also, the camera locations may be inaccessible with little spare space. If one were to provide capacitors to store sufficient charge the desired illumination power the camera would become very bulky, with required capacitors having a size in the scale of several centimetres in diameter and maybe double to treble that in length. Alternatively, if separate power and signal cables were to be used the additional cable would require excessive space, especially in confined spaces alongside production equipment. The technical problem is to device a proprietary cable 22 with male and female connectors 24 and 25, there being terminals 27 akin to Ethernet signal arrangements and positive and negative power strands 26 for provision of 24V DC power, all within the one braid. The terminal block 28 has a row of conventional ethernet ports 30 for receipt of Ethernet signal connections form a host computer, and outlet ports 29 to the cameras via the cables 22. The power is provided to the back of the block 30, not visible in Fig. 4(c). As shown in Fig. 4(b) the signal cores are arranged by colour coding T568B: White (W) - Orange (O) to Pin1, Orange to Pin 2, White -Green to Pin 3, Black to Pin 4, White-Black to Pin 5, Green to Pin 6, White-Brown to Pin 7, and Brown to Pin 8. T568A and T568B are the two-colour codes used for wiring eight-position RJ45 modular plugs, allowed under the ANSI/TIA-568-C wiring standards, and Fig 4(b) shows both. The only difference between T568A and T568B is that the orange and green pairs are interchanged.

The system in this example uses T568B for signals and data as this is the most widely adopted.

### Software Functions (Fig. 5)

The digital data processors of the server execute software code using feeds from the cameras and Internet of Things (IoT) devices, to implement industrial vision and risk analysis algorithms to assist line changeover. It increases the confidence and quality of line changeovers by improving the Line Efficiency (Overall Equipment Effectiveness %) and reducing the number of investigations and corrective action activities. It is especially beneficial for 'hotspots', where previous line clearance failures have occurred, and can be deployed in cramped conditions, unlit areas or in hard-to-access parts of the production line equipment.

The system provides a risk-weighted output including an auditable digital record of the state of a line in relation to its clearance of contamination. Also, the system is linked with manufacturing equipment to provide control signals for automated prevention of resumption of production when a line is not in an approved clear state, and to automate the release of a line for the start of the next batch.

The software architecture is clustered in nodes 10 with an authentication service microservices 100 for access to a replicated database 101. The authentication service microservices 100 provide user management and security of user sessions for a line clearance assistant interface. Replicated database microservices 101 are for a highly available database replicated over several nodes. Settings service microservices 102 provides a common settings pool for all microservices. Audit service microservices 103 perform writes and reads to manage audit logs for full activity tracking on the system 1. Queue microservices 106 provides a messaging system between microservices, for example, using RabbitMQ.

Image store volume microservices 104 are for a shared cluster volume for storing and retrieving binary files. Distributed cache microservices 110 provide a rapid access and highly available shared key store cache for use in cluster parallel algorithm orchestration.

Web and API service microservices 105 serve both the front-end website and a backend web API used to interact with the LineClearance Assistant cluster 5. Frame grabber service microservices 115 provide a pool of frame grabbers, some dedicated to cameras 11, some available in the general pool for on-demand frame grabbing from devices across the whole network or limited to their network traffic proximity segment. Distributed algorithm service microservices 116 provide a pool of algorithm agents which together can process large and high-volume parallel workflows of algorithm steps on demand.

The width of the micro-services indicates an example of the relative volume of instances of each microservice on a small cluster. The width of the frame grabbing and algorithm micro-services on a very large cluster would expand much larger relatively to the other services.

### Line Clearance Inspection Processing Method

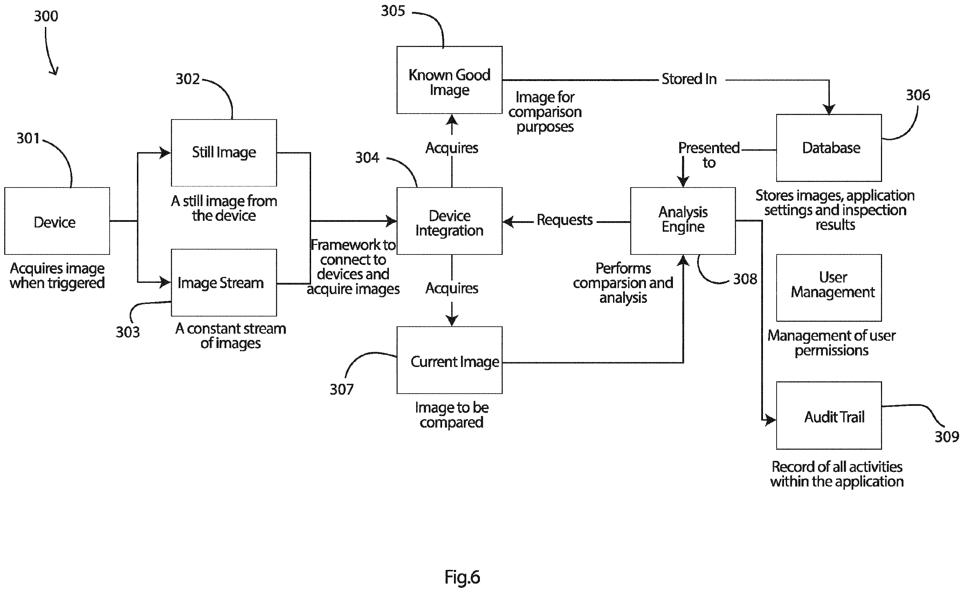

The image and data processing are performed by an algorithm-implemented process 300, shown at a high level in Fig. 6. A device 301 is used to capture an image from a single image or a stream of images 302 or 303 which are then compared by an analysis engine 308. The analysis engine 308 must determine whether the differences between the two image sets are substantial to flag differences to the user. As shown in Fig. 6, image acquisition provides a still image 302 and an image stream 303 which are fed via a network to a device integration processor 304 which acquires a known good image 305 from a database 306 and a current image 307 to be compared. The known good image 305 is stored in a database 306 for presentation to the analysis engine 308 and the current image 307 is fed in real time to the analysis engine 308. The analysis engine 308 provides an audit trail output 309.

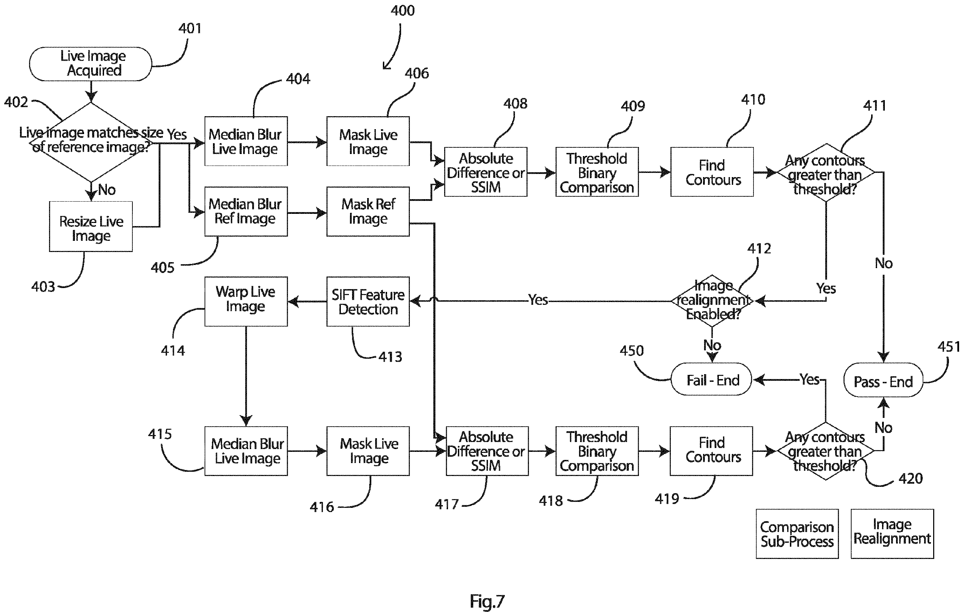

The analysis engine 308 performs the steps 400 of the diagram of Fig. 7 from image acquisition 401 through to decision. It performs a comparison between an input image and a (set of) reference(s) drawn from the database shown in Fig. 6. Objectively the result of the comparison is to highlight where significant differences between the images are located to facilitate the removal of any objects which are present in the field of view of the camera. The comparison process accounts for movement of the device taking the image (micro-movements), scenarios where there are varying levels of illumination (as commonly found indoors around machinery) and allows for operator tuning to determine the apparent size of objects of interest.

There are two main approaches used for performing the inspection: Pixel Difference and Structural Similarity Index Measure ("SSIM"), and the analysis engine 308 uses a Scale-Invariant Feature Transform ("SIFT") process to detect image movements relative to each other in order to compensate for micro-movements.

Using Pixel Difference, a comparison is made between the pixels of each image. Where there is a difference in either the Red, Green, or Blue values for each pixel in the image, a Binary Threshold (BT) will determine the degree of variance that the system will ignore in each of the colour channels for each pixel that makes up the image. Any pixel which is below the threshold will be set to Black, all other pixels will set to white. If any of the RGB values for a given pixel are white, this indicates a change between the two images.

This means that the result of the Binary Threshold process is a greyscale image which shows the variance between the two images as a set of white pixels.

SSIM (Structural Similarity Index Measure) is an alternative method of image comparison which looks for similarities within pixels from two images, specifically where the contrast or illumination of the image is poor. This is an alternative to the pixel difference approach.

Rather than differences in the RGB colour channels, SSIM uses luminance, contrast, and structure within a series of 11 x 11pixel windows within the images to construct a similarity image. The output is considered similar if the pixels in the two windows line up or have similar luminance or contrast values. SSIM produces a greyscale output image where similarities are white, and differences are black in colour. The Binary Threshold is used at the end of the comparison process to identify which pixels should be set to black in the final result and which should be set to white.

SIFT (Scale Invariant Feature Transform) is used to detect and describe local features in images. For any object in an image, interesting points on the object can be extracted to provide a "feature description" of the object. This description, extracted from a training image, is then used to identify the object when attempting to locate the object in a test image containing many other objects. To perform reliable recognition, it is important that the features extracted from the training image be detectable even under changes in image scale, noise and illumination. Such points usually lie on high-contrast regions of the image, such as object edges.

While this has many applications in computer vision, rather than using this just to de-warp an image, (as in commercial mobile phone paper scanning applications) the analysis engine performs calculations to determine the presence of unwanted components in the images and to determine the degrees of deviation from the original images in order make a judgement about whether the device has moved away from the original position by a significant amount.

Therefore, the SIFT has been augmented with CXV Global code as set out below to perform these auxiliary calculations and to return results.

The algorithms are used via an OpenCV library. The system uses multiple reference images to create a consensus result based on more than one known good state. The algorithm is run for the live input image against every reference image. As soon as any one reference image and live image give a pass result the camera scene itself is given a pass result. This is used to provide the ability to compensate for parts that rest in different positions, and other scenarios which can be ignored for the purposes of providing a pass.

### Histogram Adjustment

This is performed upon acquisition of a live input image and matching by size to a reference image, and possible re-sizing. This is used to assist in the compensation of subtle lighting differences between reference and live input images. The following parameters are used:
compareHist is used on the reference and live input image to determine relative lighting difference, and
normalizeHist or thresholdHist is used to adjust the live input image histogram to closer match the reference image.

Feature Detection
   SIFT (Scale-Invariant Feature Transform) is used to find key-points and descriptors.
   Defaults:
   features: 0 ~ infinite
   minimum-confidence: 70
Warping
   This step produces information on and compensates for camera movement or aspect ratio changes.
   BFMatcher (Brute-Force Matcher) is used to match features from the two images.
   FindHomography is used to calculate the warping points required to match the live input image to the reference image.
   WarpPerspective is used to warp the live image using the homography matrix.
   Outputs:
   left-shift: x% missing from reference image
   right-shift: x% missing from reference image
   top-shift: x% missing from reference image
   bottom-shift: x% missing from reference image
Masking after re-alignment and median blurring
   FillPoly and BitwiseAnd are used to mask off unwanted areas not requiring inspection.
Median Blur
   MedianBlur is used to remove noise.
   Defaults:
   kernel-size: 3
Absolute Difference
   AbsDiff calculates the distance between pixels from the live input image to the reference image and outputs a heatmap of those differences.
Threshold Binary
   ThresholdBinary converts the absolute difference image to black and white with the given pixel value threshold.
   Defaults:
   white-threshold-from: 40
Find Contours
   FindContours locates contours using a given strategy.
   Defaults:
   minimum-contour-area-percentage: 0.05%
   retrieval-mode: External

Any contour which is greater than the size threshold or any scene movement greater than an allowable margin provides a "Fail" result or a "Pass" result. The Fail result provides contour list data 228, a contours image 229 and/or re-alignment data 230.

The processor is configured to perform an initial inspection of a live input image with a series of stored reference images and make an initial determination based on contour threshold comparisons with the reference images to determine in steps 402 to 412:
whether the live input image passes by being the same as at least one reference image,
whether it fails due to a rogue object presence, or
whether it is uncertain due to possible camera movement.

If the latter, then the processor performs analysis steps 413 to 420 to make a pass or fail decision after re-aligning/warping the live input image.

### Initial Live input image Inspection

There is live input image acquisition 401, size matching 402, and possible re-sizing 403. There is then median blurring 404 and 405 of the live and reference images respectively to remove specks with may otherwise cause a line clearance fail. There is then masking 406 of the live and reference images respectively before Absolute Difference or SSIM processing 408, Threshold Binary comparison processing 409, and contour processing 410/411. Each scene is configured to use only one method. A contour is a series of contiguous pixels which have a similar colour characteristic. The result of the Absolute Difference or SSIM processing 408, is an image which provides a set of non-black contours against a black background. Each contour describes a potential rogue component should be investigated. The step 411 involves determining of contour differences between the live input image and a reference image exceed a threshold, and if not, then the live input image is passed in step 451. If not then in step 412 the live input image is re-aligned and if not, then the live input image fails. The threshold is based on the area of the shapes bounded by the contours. If image realignment is enabled then the processor proceeds with the much more intensive operations for the steps 413 to 420. If, after these steps the contours which have been found in this more detailed processing exceed a threshold then there is a Fail 450 or, if not, a Pass 451.

These initial inspection steps are very similar to the steps 530 onwards which are detailed below, except that they are done with the initially-received input image instead of a warped image. For example, the blurring step 404 is equivalent to the blurring step 415, and there is no need for a blurring of the reference image as this has already been done at step 405. Likewise, the masking step 406 for the reference image does not need to be repeated, and there is only masing of the input image in step 416. The step 408 is equivalent to the step 417, except that the step 417 is performed with the warped input image. The step 409 is equivalent to 418, and step 410 is equivalent to step 419, and the step 411 is equivalent to the step 420.

The step 413 is essentially the gateway to the more detailed analysis, and is more processor intensive and hence is only performed if there is an uncertain output from the step 411. It is expected that the steps 413 onwards are only needed for about a quarter of the input images. The processing operations for the steps 413 to 420 is about 100 times that for the steps 404 to 411.

Due to this architecture, the system solves the technical problem of requiring excessive data processing resources with sacrificing analysis quality.

### Detailed Analysis

The following are the Fig. 7 blocks 413 to 420 in more detail, broken down as steps 501 to 553.

| | |
|---|---|
| 501. | Fig. 7, block 413. Convert reference images to greyscale for (SIFT) feature detection. For each live input image a series of reference images is used by the processor. If the live input image matches any of the reference images, then it passes. SIFT feature detection is performed for deeper analysis where required, as set out above, and an important first step is conversion to greyscale. |
| 502. | Fig. 7, block 413. For each of a plurality of reference images detect key-points and descriptors from the reference image (using SIFT) to create a master set of data that is used when establishing whether an input image has moved. This gives a set of points on the reference image which are unique. This is shown in Fig. 8. |
| 503. | Fig. 7, block 413, also done in the initial step 403. Rescale an input image to match the reference image if different to ensures that the resolution of the input image matches the resolution of the reference image. This prevents errors due to variations in aspect ratio of captured images. |
| 504. | Fig. 7, block 413. Convert the input ("live") image to greyscale for (SIFT) feature detection to ensures that the inspected image matches the expected type. |
| 505. | Fig. 7, block 413. Detect key-points and descriptors from the input image (using SIFT, Fig. 9). This creates the set of data for the input image to determine whether the device that took the input image had moved. This covers simple movement of the camera, skewing or rotating the camera. Again, this locates a set of points on the image which are unique. |
| 506. | Fig. 7, block 413. Match descriptors between the reference and input images (Fig. 9). A matcher program takes the descriptor of each feature in the reference image and it matches this with all of the descriptors in the input image. It calculates a 'distance' for each result and the 'closest' distance result is returned as the best match. This produces a result similar to that shown in Fig. 10. The lines show where a unique point on the reference image has been 'matched' with a point on the input image. |
| 507. | Fig. 7, block 413. For every possible pair of matches the processor calculates the absolute difference between the two match distance vectors. The distance metric which the matcher program produces is not the distance between a pair of points, it is value which denotes the distance of one point from a single fixed point on the reference image. It would be better described as a position on a spectrum. The distance value for a feature in a single image is the value where the feature appears on the normalised 'spectrum', and overlaying that with another set of distance values like in the reference image. The processor runs through the spectrum plots from both images and in steps 507 to509 it performs the calculations for the overlaying of the spectrum, deleting the entries on both images where there is not an nth percentile close enough match on the spectrum. |
| 508. | Fig. 7, block 413. Find the n^{th} percentile distance difference value from the matched pairs. Filter out low confidence matches to remove chance of misaligning the images. |
| 509. | Fig. 7, block 413. Filter out matched pairs where the difference value is less than the nth percentile distance located to get remaining confident matches only. Filter out low confidence matches to remove chance of misaligning the images. |
| 510. | Fig. 7, block 414. Generate a homography matrix from the confident key-points. This step uses the confidently matched points to generate a homography for the two images. In projective geometry, a homograph is an isomorphism of projective species, induced by an isomorphism of the vector spaces from which the projective spaces derive. It is a bijection that maps lines to lines, and thus a collineation. In general, some collineations are not homographies, but the fundamental theorem of projective geometry asserts that is not so in the case of real projective spaces of dimension at least two. In the field of computer vision, any two images of the same planar surface in space are related by a homography (assuming a pinhole camera model). This has many practical applications, such as image rectification and image registration, or computation of camera motion-rotation and translation-between two images. |
| 511. | Fig. 7, block 414. Use the homography matrix to warp input image keypoints to the same coordinates as the reference image keypoints. This warps the image to match the expected reference set using the reference points. A green border is used to identify the edges of the deformed image. These are removed in a later step. The functions in this section perform geometrical transformations of the input image. This does not change the image content, but it deforms the pixel grid and maps this deformed grid to the destination image. In fact, to avoid sampling artifacts, the mapping is done in the reverse order, from destination to the source. That is, for each pixel (x,y) of the destination image, the functions compute coordinates of the corresponding "donor" pixel in the source image and copy the pixel value. |
| 512. | Fig. 7, block 414. Expand the width and height of the newly warped input image by 10% outwards. Find contours is not reliable at finding the outer shape profile if it bleeds right to the edges. By expanding the canvas temporarily (this is reverted in Step 518) there is a clear island created of the new warped shape, found contours can then easily and quickly locate that island, as opposed to it being say a peninsula coming out from the sides of the image. |
| 513. | Fig. 7, block 414. Binarise the image, turning green pixels black (remainder areas after warping), and any non-green pixels white. At this point there is a colour image with a green border around the island that is the skewed shape. This colour image is a temporary matrix just for finding the outside hull of the warping only. |
| 514. | Fig. 7, block 414. Calculate a structuring element to pass to an Erosion function which reduces the noise associated with edges of shapes in the image. This step calculates the size of the kernel used to perform the erosion. |
| 515. | Fig. 7, block 414. Erode the warped image shape by a number of pixels, say 5, to alleviate border line detections due to blurring differences in reference to input images later on. This is execution of the erosion function. |
| 516. | Fig. 7, block 414. Use the find contours program to get polygon coordinates for the warped input images bounding shape. Refer to the image of Fig. 11. This is used to locate the outside border of the warped image. This is required to de-warp the image. In this example it would determine the dark line as the border of the warped image. |
| 517. | Fig. 7, block 414. Find the largest contour, which should be the outside border of the warped input image. The processor is only interested in the largest polygon, so this step finds the largest polygon in the set by ordering by area. |
| 518. | Fig. 7, block 414. Calculate the real shape coordinates by adjusting out the 10% image expansion used earlier to help the "find contours" program to work accurately. Because the find contours program is run on the 10% expanded image to find the `island'/'hull' shape after the warping, the coordinates for the results start from -10% x and y, this step just changes the coordinates back to that the reflect the original image size as the 0,0 point. |
| 519. | Fig. 7, block 420. Calculate the total scene movement percentage using the percentage of total pixel area which is not outside the warped border. This is a mechanism to determine the percentage movement of the two scenes. The analysis engine then applies a threshold to automatically fail an image which was taken with a camera that moved too much. |
| 520. | Fig. 7, block 414. Create a new blank canvas. |
| 521. | Fig. 7, block 414. Use the eroded shape as a mask to cut out a reliable shape from the warped input image and paste onto the black canvas. |
| 522. | Fig. 7, block 414. Find the points closest to the top left, top right, bottom left and bottom right using linear 2D distance between two-points calculation. |
| 523. | Fig. 7, block 414. Calculate the "move up percentage" by using the distance from the top of the image to the furthest of the top two warped corner points. This, and steps 24 to 27, determine which is the biggest issue for movement. |
| 524. | Fig. 7, block 414. Calculate the MoveDownPercentage by using the distance from the bottom of the image to the furthest of the bottom two warped corner points. |
| 525. | Fig. 7, block 414. Calculate the MoveLeftPercentage by using the distance from the left of the image to the furthest of the left two warped corner points. |
| 526. | Fig. 7, block 414. Calculate the MoveRightPercentage by using the distance from the right of the image to the furthest of the right two warped corner points. |
| 527. | Fig. 7, block 414. Calculate an estimated camera rotation recommendation for an output representing a clockwise degrees rotation, "RotateClockwiseDegrees" output. By measuring the angle on triangles created on the top and bottom tilts of the warped image. |
| 528. | Fig. 7, block 414. Create a new blank canvas. |
| 529. | Fig. 7, block 414. Use the warped border shape from earlier as a mask to cut out a reliable shape from the reference image and paste onto the black canvas, replacing the reference image from now. |
| 530. | Fig. 7, block 415. Gaussian blur both the reference and input images to create smoother detections and reduce small noise detections from tiny differences. This removes the small amounts of noise that may be present in the image, and also softens the impact of subtle lighting changes. |
| 531. | Fig. 7, block 416. Create two new blank canvases for the new masked input and reference images. |
| 532. | Fig. 7, block 416. Use the user defined polygon as a mask to cut out a reliable shape from the warped input image and paste onto a black canvas, this replaces the input image from this point. This provides a black background with the warped input image showing. This is now used as the input image. |
| 533. | Fig. 7, block 416. Use the user defined polygon as a mask to cut out a reliable shape from the reference image and paste onto another black canvas, this replaces the reference image from this point. This provides a black background with the content of the reference image from the same warped shape applied to it. There are now two images which can be compared. |
| 534. | Fig. 7, block 416. Use a fill polygon program "FillPoly" to draw black shapes where user defined cut-out masks are required, on the input image. The analysis applies any user-defined masks on the input image to prevent inspection of areas of the image which are subject to movement. |
| 535. | Fig. 7, block 416. Use the fill polygon program to draw black shapes where user-defined cut-out masks are required, on the reference image. Any user-defined masks are applied on the reference image to prevent inspection of areas of the image which are subject to movement. |
| 536. | Fig. 7, block 417. Down-sample both input and reference image to greyscale if not already. If required, the processor down-samples any images being used in an SSIM inspection. |
| 537. | Fig. 7, block 417. Compute the weighted means using multiple pass gaussian blur and multiplying pixels. The processor uses a noise removal program, "Gaussian Blur", to remove any noise present in the images. This can be the result of electrical interference, or only due to the electrical properties of the specific sensors used. By using the Gaussian blur effect, these small defects are smoothed away. |
| 538. | Fig. 7, block 417. Compare the luminance between both weighted means images. |
| 539. | Fig. 7, block 417. Compare the contrast between both weighted means images. |
| 540. | Fig. 7, block 417. SSIM function denominator, luminance multiplied by contrast. |
| 541. | Fig. 7, block 418. Produce difference image. |
| 542. | Fig. 7, block 418. If either the input or reference image has less channels (greyscale) then down-sample the other image. For pixel difference inspections transform images to greyscale if required. |
| 543. | Fig. 7, block 418. Generate an absolute difference image showing the distance between each pixel colour value between the input and reference image. For the images, this produces a heatmap effect where the presence of a non-black coloured pixel indicates a difference in that colour value of that pixel between the two images. The resulting image looks similar to that shown in Fig. 12 and the colours present in this image indicate how different the two pixels being compared were in terms of the RGB colour space. |
| 544. | Fig. 7, block 418. Use the difference image to filter in extreme pixel value differences according to the from threshold value thereby creating a black and white binary representation of the qualifying pixel differences. The system then applies a threshold to the colour difference to de-sensitize the inspection to minor variations in illumination, shadow or even the presence of dust or dirt. |
| 545. | Fig. 7, block 419. Locate contours throughout the threshold binary image. For each contiguous shape defined by non-black pixels in the absolute difference image, the system draws a contour around the shape. This allows it to determine the area inside the shape and remove those defects which are too small to be considered relevant to the user. |
| 546. | Fig. 7, blocks 419/420. Filter out the smallest contours, leaving a maximum amount qualifying. This orders the list of contours by area in descending order, then removes the smallest defect regions to reduce the sensitivity of the inspection and to speed up Step 47. |
| 547. | Fig. 7, blocks 419/420. For the remaining contours, calculate the area of each one. |
| 548. | Fig. 7, block 420. Perform smoothing on each contour, first calculate a perimeter arc of the contour. The contours produced can vary in terms of accuracy. More points on the contour gives a better indication of shape, but can also massively increase the |
| | performance requirements of the solution. This allows the analysis engine to manage the performance load at the expense of the accuracy of the perimeter of the contour. |
| 549. | Fig. 7, block 420. Calculate a sensible epsilon value (maximum distance from contour to approximated smoothed contour) (arcLength * (percentageDistanceFromContour / 100). This enables the analysis engine to draw smooth contours when plotting the points that have been calculated. |
| 550. | Fig. 7, block 420. Generate a new approximated smoothed contour based on the epsilon value. This creates a new contour based on the smoothing performed. |
| 551. | Fig. 7, block 420. Go through each contour and ensure all points are inside the image coordinates, because smoothing can push them out. This ensures that no points from the defect are outside the contours. Smoothing can result in contour boundaries being displayed inside the actual defect. |
| 552. | Fig. 7, block 420. Filter out contours which have an area smaller than the minimum percentage as compared to the overall image size, or do not qualify based on width and height restrictions. The analysis engine then applies a range of thresholds to eliminate any contours which are too narrow, too short, too wide, too tall, or are above or below a specific area. This assists in ensuring that edge defects in the image processing can be removed, as well as de-sensitizing the inspection process. |
| 553. | Fig. 7, block 420. If camera movement in any one direction, Up, Down, Left, Right, or Rotation Degrees is greater than the scene movement threshold or if any contours qualified then the image will be a fail otherwise it will be a pass. This is the final result which is calculated and shown to the user. |

### Process Further Details, with toolkits, functions, and parameter values.

| Step Ref | Step Description | Toolkit | Functions | Optimal Parameter Values *italic* = *configurable* | Comment |
|---|---|---|---|---|---|
| **501** | Convert reference images to greyscale for SIFT feature detection. (Fig. 7, 413) | OpenCV | CvtColor | | The SIFT algorithm only works on greyscale images. This ensures that the reference image is the correct type before the SIFT algorithm is used. |
| **502** | Pre detect keypoints and descriptors from reference image using SIFT. | OpenCV | SIFT.detect AndCompu te | *Number of Features: 0* | This creates the master set of data that is used when establishing whether a given comparison (input) image has moved.This is done for each reference image stored in the library. This gives a set of points on the image which are unique. (Dark dots) |
| | | | | *Octave Layers: 3* | |
| | | | | *Contrast Threshold: 0.04 (4%)* | |
| | Refer to the image of Fig. 8. (Fig. 7, 413) | | | | |
| | | | | *Edge Threshold: 10* | |
| | | | | *Guassian Blur Sigma: 1.6* | |
| **503** | Rescale input image to match the reference image if different. (Fig. 7, 403) | CXV | | | Ensures that the resolution of the input image matches the resolution of the reference image. This prevents errors due to variations in aspect ratio of captured images. |
| **504** | Convert input image to greyscale for SIFT feature detection. (Fig. 7, 413) | OpenCV | CvtColor | | The SIFT algorithm only works on greyscale images. This ensures that the inspected image matches the expected type. |
| **505** | Detect keypoints and descriptors from input image using SIFT. | OpenCV | SIFT.detect AndCompu te | *Number of Features: 0* | Create the set of data for the input image to determine whether the device that took the input image had moved. This covers simple movement of the camera, skewing or rotating the camera. Again, this locates a set of points on the image which are unique. |
| | | | | *Octave Layers: 3* | |
| | | | | *Contrast Threshold: 0.04 (4%)* | |
| | Refer to the image of Fig. 9. (Fig. 7, 413) | | | | |
| | | | | *Edge Threshold: 10* | |
| | | | | *Guassian Blur Sigma: 1.6* | |
| **506** | Match descriptors between reference and input image. | OpenCV | BFMatcher | NormType: L2 Cross Check: True | The BruteForce matcher takes the descriptor of each feature in the reference image and it matches this with all of the descriptors in the input image. It calculates a 'distance' for each result and the 'closest' distance result is returned as the best match. |
| | Refer to the image of Fig. 10. (Fig. 7, 413) | | | | |
| | | | | | This produces a result similar to that shown in Fig. 9. The lines show where a unique point on the reference image has been 'matched' with a point on the input image. |
| **507** | For every possible pair of matches calculate the absolute difference between the two match distance vectors. (Fig. 7, 413) | CXV | | | The distance metric which the BFMatcher produces is not the distance between a pair of points, it is value which denotes the distance of one point from a single fixed point on the reference image. It would be better described as a position on a spectrum. The distance value for a feature in a single image is the value where the feature appears on the normalised 'spectrum', and overlaying that with another set of distance values like in the reference image. The analysis engine runs through the spectrum plots from both images and in steps 7 to 9 we are doing the maths for the overlaying of the spectrum, deleting the entries on both images where there is not an nth percentile close enough match on the spectrum. |
| **508** | Find the nth percentile distance difference value from the matched pairs. (Fig. 7, 413) | CXV | | *Confidence Percentage:* 70% | Filter out low confidence matches to remove chance of misaligning the images. |
| **509** | Filter out matched pairs where the difference value is less than the nth percentile distance located to get remaining confident matches only. (Fig. 7, 413) | CXV | | *Confidence Percentage:* 70% | Filter out low confidence matches to remove chance of misaligning the images. |
| **510** | Generate a homography matrix from the confident keypoints. (Fig. 7, 414) | OpenCV | Homograp hy | | This step will use the confidently matched points to generate a homography for the two images. In projective geometry, a homograph is a isomorphism of projective species, induced by an isomorphism of the vector spaces from which the projective spaces derive. It is a bijection that maps lines to lines, and thus a collineation. In general, some collineations are not homographies, but the fundamental theorem of projective geometry asserts that is not so in the case of real projective spaces of dimension at least two. In the field of computer vision, any two images of the same planar surface in space are related by a homography (assuming a pinhole camera model). This has many practical applications, such as image rectification and image registration, or computation of camera motion-rotation and translation-between two images. Once camera rotation and translation have been extracted from an estimated homography matrix, this information may be used for navigation, or to insert models of 3D objects into an image or video, so that they are rendered with the correct perspective and appear to have been part of the original scene. |
| **511** | Use the homography matrix to warp input image keypoints to the same coordinates as the reference image keypoints. (Fig. 7, 414) | OpenCV | WarpPersp ective | Border Type: Constant | This warps the image to match the expected reference set using the reference points. A green border is used to identify the edges of the deformed image. These are removed in a later step. The functions in this section perform geometrical transformations of the input image. This does not change the image content, but it deforms the pixel grid and maps this deformed grid to the destination image. In fact, to avoid sampling artifacts, the mapping is done in the reverse order, from destination to the source. That is, for each pixel (x,y) of the destination image, the functions compute coordinates of the corresponding "donor" pixel in the source image and copy the pixel value. |
| | | | | Border Value: Green | |
| **512** | Expand the width and height of the newly warped input image by 10% outwards. (Fig. 7, 414) | CXV | | | Find contours is not reliable at finding the outer shape profile if it bleeds right to the edges. By expanding the canvas temporarily (this is reverted in Step 18) there is a clear island created of the new warped shape, Find contours can then easily and quickly locate that island, as opposed to it being say a peninsula coming out from the sides of the image. |
| **513** | Binarise the image, turning green pixels black (remainder areas after warping), and any non green pixels white. (Fig. 7, 414) | CXV | | | At this point there is a colour image with a green border around the island that is the skewed shape. This colour image is a temporary matrix just for finding the outside hull of the warping only. Later we resume from the greyscale warped input (if the original image was grayscale). |
| **514** | Calculate a structuring element to pass to erosion. (Fig. 7, 414) | OpenCV | GetStructur ingElement | Morph Shape: Rect | An Erosion function reduces the noise associated with edges of shapes in the image. This step calculates the size of the kernel used to perform the erosion. |
| | | | | ksize: 5x5 pixels | |
| **515** | Erode the warped image shape by 5 pixels to alleviate border line detections due to blurring differences in reference to input images later on. (Fig. 7, 414) | OpenCV | Erode | Morph Shape: Rect | This is execution of the erosion function. |
| | | | | ksize: 5x5 pixels | |
| **516** | Use find contours to get polygon coordinates for the warped input images bounding shape. Refer to image of Fig. 11. (Fig. 7, 414) | OpenCV | FindConto urs | Retrieval Mode: External Countour | This is used to locate the outside border of the warped image. This is required to de-warp the image. In this example it would determine the dark line as the border of the warped image. |
| | | | | Approximatio n Method: ApproxSimple | |
| **517** | Find the largest contour, should be the outside border of the warped input image. (Fig. 7, 414) | OpenCV | ContourAr ea | | The processor is only interested in the largest polygon, so this step finds the largest polygon in the set by ordering by area. |
| **518** | Calculate the real shape coordinates by adjusting out the 10% image expansion used earlier to help FindContours work accurately. (Fig. 7, 414) | CXV | | F | Because the FindContours program is run on the 10% expanded image to find the `island'/'hull' shape after the warping, the coordinates for the results start from -10% x and y, this step just changes the coordinates back to that the reflect the original image size as the 0,0 point. |
| **519** | Calculate the total scene movement percentage using the percentage of total pixel area which is not outside the warped border. (Fig. 7, 420) | CXV | | | This is a mechanism to determine the percentage movement of the two scenes. The analysis engine then applies a threshold to automatically fail an image which was taken with a camera that moved too much. |
| **520** | Create a new black canvas. (Fig. 7, 414) | OpenCV | new Mat(), FillPoly | Colour: Black | |
| **521** | Use the eroded shape as an mask to cut out a reliable shape from the warped input image and paste onto the black canvas. (Fig. 7, 414) | OpenCV | Copy To | | |
| **522** | Find the points closest to the top left, top right, bottom left and bottom right using linear 2d distance between two points calculation. (Fig. 7, 414) | CXV | | | |
| **523** | Calculate the MoveUpPercent age by using the distance from the top of the image to the furthest of the top two warped corner points. (Fig. 7, 414) | CXV | | | This determines which direction is the biggest issue for movement. |
| **524** | Calculate the MoveDownPerc entage by using the distance from the bottom of the image to the furthest of the bottom two warped corner points. (Fig. 7, 414) | CXV | | | This determines which direction is the biggest issue for movement. |
| **525** | Calculate the MoveLeftPercen tage by using the distance from the left of the image to the furthest of the left two warped corner points. (Fig. 7, 414) | CXV | | | This determines which direction is the biggest issue for movement. |
| **526** | Calculate the MoveRightPerce ntage by using the distance from the right of the image to the furthest of the right two warped corner points. (Fig. 7, 414) | CXV | | | This determines which direction is the biggest issue for movement. |
| **527** | Calculate an estimated camera rotation recommendation for RotateClockwis eDegrees output. By measuring the angle on triangles created on the top and bottom tilts of the warped image. | CXV | | | This determines whether rotation is the biggest issue for movement. |
| | Top triangle leaning left, Top triangle leaning right, Bottom triangle leaning left, Bottom triangle leaning right. | | | | |
| | Find the maximum clockwise or anticlockwise (negative value) from whatever triangles could be found outside of the warped border. (Fig. 7, 414) | | | | |
| **528** | Create a new black canvas. (Fig. 7, 414) | OpenCV | new Mat(), FillPoly | Colour: Black | |
| **529** | Use the warped border shape from earlier as a mask to cut out a reliable shape from the reference image and paste onto the black canvas, replacing the reference image from now. (Fig. 7, 414) | OpenCV | Copy To | | |
| **530** | Gaussian blur both the reference and input images to create smoother detections and reduce small noise detections from tiny differences. (Fig. 7, 415) | OpenCV | GaussianBl ur | *Kernel Size X: 3 pixels* | This removes the small amounts of noise that may be present in the image, and also softens the impact of subtle lighting changes. |
| | | | | *Kernel Size Y: 3 pixels* | |
| | | | | Sigma X: 0 | |
| | | | | Sigma Y: 0 | |
| | | | | Border Type: Replicate | |
| **531** | Create two new black canvases for the new masked input and reference images. (Fig. 7, 416) | OpenCV | new Mat(), FillPoly | Colour: Black | |
| **532** | Use the user defined polygon as a mask to cut out a reliable shape from the warped input image and paste onto a black canvas, this replaces the input image from this point. (Fig. 7, 416) | OpenCV | Copy To | | This provides a black background with the warped input image showing. This is now used as the input image. |
| **533** | Use the user defined polygon as a mask to cut out a reliable shape from the reference image and paste onto another black canvas, this replaces the reference image from this point. (Fig. 7, 416) | OpenCV | Copy To | | This provides a black background with the content of the reference image from the same warped shape applied to it. There are now two images which can be compared. |
| **534** | Use FillPoly to draw black shapes where user defined cutout masks are required, on the input image. (Fig. 7, 416) | OpenCV | FillPoly | | The analysis applies any user-defined masks on the input image to prevent inspection of areas of the image which are subj ect to movement. |
| **535** | Use FillPoly to draw black shapes where user defined cutout masks are required, on the reference image. (Fig. 7, 416) | OpenCV | FillPoly | | Any user-defined masks are applied on the reference image to prevent inspection of areas of the image which are subject to movement. |
| **536** | Downsample both input and reference image to greyscale if not already. (Fig. 7, 417) | OpenCV | CvtColor | | If required, the engine down-samples any images being used in an SSIM inspection. |
| **537** | Compute the weighted means using multiple pass Gaussian blur and multiplying pixels. (Fig. 7, 417) | OpenCV | GaussianBl ur | Kernel Size X: 11 pixels | The analysis engine uses the Gaussian Blur to remove any noise present in the images. |
| | | | | Kernel Size Y: 11 pixels | |
| | | | | | This can be the result of electrical interference, or purely due to the electrical properties of the specific sensors used. By using the Gaussian blur effect, these small defects are 'smoothed' away. |
| | | | | Sigma X: 1.5 | |
| | | | | Sigma Y: 1.5 | |
| | | | | Border Type: Default | |
| **538** | Compare the luminance between both weighted means images. (Fig. 7, 417) | OpenCV | Mul | K1 = 0.01 | . |
| | | | | L = 255 | |
| | | | | C1 = (K1 * L)^2 | |
| **539** | Compare the contrast between both weighted means images. (Fig. 7, 417) | OpenCV | Mul | K2 = 0.03 | |
| | | | | L = 255 | |
| | | | | C2 = (K1 * L)^2 | |
| **540** | SSIM function denominator, luminance multiplied by contrast. (Fig. 7, 417) | OpenCV | Mul | | |
| **541** | Produce difference image. (Fig. 7, 418) | OpenCV | Divide, Mul, Mean | | |
| **542** | If either the input or reference image has less channels (greyscale) then downsample the other image. (Fig. 7, 418) | OpenCV | CvtColor | Colour Conversion | For Pixel Difference inspections transform images to greyscale if required. |
| | | | | Code: RGB2GRAY | |
| **543** | Generate an absolute difference image showing the distance between each pixel colour value between the input and reference image. Refer to image of Fig. 12. (Fig. 7, 418) | OpenCV | AbsDiff | | For the images, this produces a heatmap effect where the presence of a non-black coloured pixel indicates a difference in that colour value of that pixel between the two images. The resulting image looks similar to that shown in Fig. 11 and the colours present in this image indicate how different the two pixels being compared were in terms of the RGB colour space. |
| **544** | Use the difference image to filter in extreme pixel value differences according to the from threshold value thereby creating a black and white binary representation of the qualifying pixel differences. (Fig. 7, 418) | OpenCV | Threshold | Threshold Method: Binary | The system then applies a threshold to the colour difference to de-sensitize the inspection to minor variations in illumination, shadow or even the presence of dust or dirt. |
| | | | | Threshold: 40 | |
| | | | | Max Value: 255 | |
| **545** | Locate contours throughout the threshold binary image. (Fig. 7, 419) | OpenCV | FindConto urs | Retrieval Mode: External Countour | For each contiguous shape defined by non-black pixels in the absolute difference image, the system draws a contour around the shape. This allows it to determine the area inside the shape and remove those defects which are too small to be considered relevant to the user. |
| | | | | Approximatio n Method: ApproxSimple | |
| **546** | Filter out the smallest contours, leaving a maximum amount qualifying. (Fig. 7, 419/420) | CXV | | *TopXDescendi ng: 20* | This orders the list of contours by area in descending order, then removes the smallest defect regions to reduce the sensitivity of the inspection and to speed up Step 47. |
| **547** | Calculate the area of each contour. (Fig. 7, 419/420) | OpenCV | ContourAr ea | | For the remaining contours, calculate the area of each one. |
| **548** | Perform smoothing on each contour, first calculate a perimeter arc of the contour. (Fig. 7, 420) | OpenCV | ArcLength | Closed: True | The contours produced can vary in terms of accuracy. More points on the contour gives a better indication of shape, but can also massively increase the performance requirements of the solution. This allows the analysis engine to manage the performance load at the expense of the accuracy of the perimeter of the contour. |
| **549** | Calculate a sensible epsilon value (maximum distance from contour to approximated smoothed contour) (arcLength * (percentageDista nceFromContou r / 100). (Fig. 7, 420) | CXV | | *Percentage Distance From Contour: Low Smoothing = 0.1, Medium Smoothing = 0.2,High Smoothing = 0.5* | This enables the analysis engine to draw smooth contours when plotting the points that have been calculated. |
| **550** | Generate a new approximated smoothed contour based on the epsilon value. (Fig. 7, 420) | OpenCV | ApproxPol yDP | Epsilon: As calculated above | This creates a new contour based on the smoothing performed. |
| | | | | Closed: True | |
| **551** | Go through each contour and ensure all points are inside the image coordinates, because smoothing can push them out. (Fig. 7, 420) | CXV | | | This ensures that no points from the defect are outside the contours. Smoothing can result in contour boundaries being displayed inside the actual defect. |
| **552** | Filter out contours which have an area smaller than the minimum percentage as compared to the overall image size, or do not qualify based on width and height restrictions. (Fig. 7, 420) | CXV | | *EnableMinimu mAreaPercent age = True* | The analysis engine then applies a range of thresholds to eliminate any contours which are too narrow, too short, too wide, too tall, or are above or below a specific area. |
| | | | | *MinimumArea Percentage = 0.02* | |
| | | | | | This assists in ensuring that edge defects in the image processing can be removed, as well as de-sensitizing the inspection process. |
| | | | | *EnableMaxim umAreaPercen tage = False* | |
| | | | | *MaximumArea Percentage = 100* | |
| | | | | *EnableMinimu m WidthPercen tage = False* | |
| | | | | *Minimum Widt hPercentage =* 2 | |
| | | | | *EnableMaxim um WidthPerce ntage = False* | |
| | | | | *MaximumWidt hPercentage = 100* | |
| | | | | *EnableMinimu mHeightPerce ntage = False* | |
| | | | | *MinimumHeig htPercentage* = 2 | |
| | | | | *EnableMaxim umHeightPerc entage = False* | |
| | | | | *MaximumHeig htPercentage = 100* | |
| **553** | If camera movement in any one direction, Up, Down, Left, Right, or Rotation Degrees is greater than the scene movement threshold or if any contours qualified then the image will be a fail otherwise it will be a pass. (Fig. 7, 420) | CXV | | *AllowableScen eMovementPer centage =* 10% | This is the final result which is calculated and shown to the user. |

It will be appreciated that the system provides for comprehensive capture of images on a line and for efficient processing of the images to provide line clearance data to help ensure that the production line is un-contaminated before production begins. It is advantageous that the data is provided in the form of contour list data and images and re-alignment data, and that the contour data is derived form an analysis of where any contour greater than a size threshold or scene movement greater than allowable occurs. The in-feed of histogram adjustment, live input image feature detection, reference image feature detection to provide a warp live input image is very advantageous at providing re-alignment data. We have found that it is particularly accurate to mask both live and reference images in parallel in order to provide absolute difference data for generation of threshold binary data and then contours.

The invention is not limited to the embodiments described but may be varied in construction and detail within the scope of the claims.

## Claims

1. A production line clearance system (1) comprising a plurality of cameras (4, 11), means to mount the cameras at strategic location of a production line, and a digital data processor (10) configured to process images from the cameras according to algorithms to generate an output indicative of line clearance status, wherein the processors are configured to:
implement an inspection process for each of a stream of live input images acquired by a camera with use of a plurality of reference images, in which a pass output is provided for a live input image if it matches at least one of said reference images, and a fail output is provided if such a match is not found and a further process (413-420) is performed to check with feature detection operations (413, 414) that the live input image is not mis-aligned and, after realigning the live input image, does not match a reference image, and
wherein:
the processor (10) is configured to execute software in a microservices architecture,
the microservices include authentication service microservices (100) implementing user management and security of user sessions for a line clearance assistant interface, settings service microservices (102) providing a common settings pool for all microservices, and audit service microservices (103) for performing writes and reads to audit logs for full activity tracking on the system,
the microservices include queue microservices (106) providing a messaging system between microservices, and replicated database microservices (101) for a highly available database replicated over several nodes, and
the processor is adapted to be linked with manufacturing equipment to provide control signals for automated prevention of resumption of production when a line is not in an approved clear state, and to automate the release of a line for the start of the next batch.

2. A line clearance system as claimed in claim 1, wherein at least one camera comprises a lens (19) in a tubular housing (13) with a transparent cover (16) at a distal end, and proximally of said distal end an outer tubular housing (14) surrounding a ring of LEDs (12) and an annular cover (15) having a field of emission which surrounds the distal tubular housing (13) without being incident on the lens transparent cover (16).

3. A line clearance system as claimed in claim 2, wherein the LEDs are mounted on a modular annular substrate, being replaceable by removal of the outer tubular housing (14) and insertion of the LEDs of a different characteristic for a different location on a line.

4. A line clearance system as claimed in claims 2 or 3, wherein the material of the housings is metal and the material of the covers is glass.

5. A line clearance system as claimed in any preceding claim, wherein each camera is supplied by a single cable (22) with both signal/data cores (27) and power cores (26).

6. A line clearance system as claimed in claim 5, wherein the signal cores are in an industry-standard arrangement such as Ethernet and the power cores are included within the same sheath and are coupled to a terminal block (28) separately from ports (290) for the signal/data cores.

7. A line clearance system as claimed in any preceding claim, wherein the microservices include image store volume microservices (104) implementing a shared cluster volume for storing and retrieving binary files, and distributed cache microservices (110) providing a shared key store cache for use in cluster parallel algorithm orchestration.

8. A line clearance system as claimed in any preceding claim, wherein the microservices include frame grabber service microservices (115) at least some of which are dedicated to sidecar cameras (11), at least some being available in a general pool for on-demand frame grabbing from the cameras or limited to their network traffic proximity segment, and a pool of algorithm agents which together can process large and high-volume parallel workflows of algorithm steps on demand.

9. A line clearance system as claimed in any preceding claim, wherein the processor is configured to perform an initial inspection of a live input image with a series of stored reference images and make an initial determination based on contour threshold comparisons with the reference images to determine whether the live input image passes by being the same as a reference image, whether it fails due to a rogue object presence, is uncertain due to possible camera movement and if the latter then performing the following to make a pass or fail decision after re-aligning/warping the live input image:
a. convert a plurality of reference images to greyscale (501), and for each detect key points and descriptors (502);
b. receive a plurality of live input images from at least one of said cameras and, convert each input image to greyscale (504) and detect key points and associated descriptors from said input image (505);
c. for each input image calculate (506, 507, 508, 509) a distance between input image and reference image key points to match said key points;
d. generate (510) a homography matrix of matched key points, and use (511) the matrix to warp input image key points to the same co-ordinates as the reference image key points;
e. execute a find contours program to get polygon co-ordinates (419, 516) for the warped image bounding shape to provide a warped image border (517 and 518), in which a contour is series of contiguous pixels which have a similar colour characteristic;
f. calculate total scene movement proportion (519) using the total pixel area which is not outside the warped border and automatically failing an input image which was taken by a camera which is deemed to have moved excessively;
g. for input images which are not failed, create a blank canvas (520), and use the warped image boundary as a mask applied to the blank canvas (521), and find points closest to extremities of the boundary (522) and calculate for each a move proportion value (523 to 526);
h. create a fresh blank canvas (528) and use the warped border shape as a mask to cut (529) out a reliable shape from the reference image and paste onto the fresh blank canvas;
i. create (531) two new blank canvases for the new masked input and reference images;
j. use (532) a user-defined polygon as a mask to cut out a reliable shape from the reference image and paste onto one of said blank canvases to provide a black background with the warped input image showing to provide a fresh input image, and use (533) a user-defined polygon as a mask to cut out a reliable shape from the reference image and paste onto one of said blank canvases to provide a black background with the reference image showing to provide a fresh reference image;
k. use (534) a fill polygon program to draw black shapes where user-defined cut-out masks are required, on the input image, and (535) use the fill polygon program to draw black shapes where user-defined cut-out masks are required, on the reference image;
l. compute (537) a weighted means images using multiple pass Gaussian blur and multiplying pixels, and compare (538) luminance and contrast (539) between the weighted means images, and produce a difference image (543) of the difference between each pixel colour value between the input and reference images, and use (544) the difference image to filter in extreme pixel value differences and provide a binary representation of the pixel differences; and
m. analyse said pixel differences (545 to 553) to determine if the input image represents an un-allowed line clearance event.

10. A line clearance system as claimed in claim 9, wherein step (d) is followed by a step (d1) of binarizing the warped image (513) and calculating a structuring element (514) to pass to an erosion function which reduces noise associated with edges of shapes in the warped image.

11. A line clearance system as claimed in claims 9 or 10, wherein said step (h) further includes a step (h1) of performing a Gaussian blur (530) of both the reference and input images to remove small amounts of noise that may be present in the image, and also soften the impact of subtle lighting changes.

12. A line clearance system as claimed in any of claims 9 to 11, wherein said step (l) includes creating (544) a binary representation of the pixel differences with application of a threshold to de-sensitize the inspection to minor variations in illumination or shadow.

13. A line clearance system as claimed in claim 12, wherein said step (m) includes (545) locating contours throughout the binary representation and for each contiguous shape defined by non-black pixels drawing a contour around the shape to determine the area inside the shape and remove those defects which are too small to be considered relevant to the user; and filtering (546) out the smallest contours and ordering the list of contours by area in descending order and removing the smallest defect regions to reduce the sensitivity of the inspection, and (547) calculating the area of each contour; and filter out contours (552) which have an area smaller than a minimum proportion as compared to the overall image size, or do not qualify based on width and height restrictions, and applying a range of thresholds to eliminate any contours which are too narrow, too short, too wide, too tall, or are above or below a specific area to assists in ensuring that edge defects in the image processing can be removed, as well as de-sensitizing the inspection process; and (553) if camera movement in any one direction is greater than a scene movement threshold or if any contours qualified then the image will be a fail otherwise it will be a pass.

14. A line clearance system as claimed in claim 13, wherein step (m) includes, before calculating the area of each contour, performing smoothing on each contour to calculate a perimeter arc of the contour, an calculating a sensible epsilon value to draw smooth contours when plotting the points that have been calculated, and generate a new approximated smoothed contour based on the epsilon value to provide a new contour based on the smoothing performed.

15. A line clearance system as claimed in any preceding claim, wherein the cameras are connected in at least one cluster (5) linked to a switch (3), in turn linked with a server (10) having the digital data processors.

## Patentansprüche

1. Line-Clearance-System (1) für eine Produktionslinie umfassend eine Mehrzahl von Kameras (4, 11), Mittel zur Montage der Kameras an strategischen Plätzen einer Produktionslinie, und einen digitalen Datenprozessor (10) konfiguriert zum Bearbeiten von Bildern von den Kameras gemäß Algorithmen zum Erzeugen einer Ausgabe, die den Status der Line-Clearance anzeigt, wobei die Prozessoren zu Folgendem konfiguriert sind:
Implementieren eines Inspektionsprozesses für jedes Bild aus einem Strom von Live-Eingabebildern, die von einer Kamera erfasst worden sind, unter Verwendung einer Mehrzahl von Referenzbildern, in welchen eine Bestätigungsausgabe für ein Live-Eingabebild bereitgestellt wird, wenn es mit mindestens einem der Referenzbilder übereinstimmt, und eine Verwurfsausgabe bereitgestellt wird, wenn eine solche Übereinstimmung nicht gefunden wird und ein weiterer Prozess (413-420) durchgeführt wird, um mit Merkmalerkennungsoperationen (413, 414) nachzuprüfen,
dass das Live-Eingabebild nicht falsch ausgerichtet ist und nach Neuausrichtung des Live-Eingabebildes es mit keinem Referenzbild übereinstimmt, und wobei:
der Prozessor (10) konfiguriert ist, Software in einer Mikroservices-Architektur auszuführen,
die Mikroservices Authentifizierungsdienst-Mikroservices (100), die Benutzerverwaltung und Sicherheit von Benutzersitzungen für eine Line-Clearance-Assistentenschnittstelle implementieren, Einstellungsdienst-Mikroservices (102), die einen gemeinsamen Einstellungspool für alle Mikroservices bereitstellen, und Systemprüfdienst-Mikroservices (103) zum Durchführen von Eintragungen in und Zurücklesen aus Prüfprotokollen für volles Nachverfolgen von Aktivitäten auf dem System einschließen,
die Mikroservices Warteschlangen-Mikroservices (106), die ein Mitteilungssystem zwischen Mikroservices bereitstellen, und replizierte Datenbank-Mikroservices (101) für eine in hohem Maße verfügbare Datenbank, die über mehrere Knoten repliziert ist, einschließen, und
der Prozessor adaptiert ist, mit Herstellungsausrüstung gelinkt zu werden, um Steuersignale für automatisierte Verhinderung einer Produktionswiederaufnahme bereitzustellen, wenn eine Linie sich nicht in einem genehmigten Klarzustand befindet, und die Freigabe einer Linie für den Start des nächsten Batches zu automatisieren.

2. Line-Clearance-System nach Anspruch 1, wobei mindestens eine Kamera ein Objektiv (19) in einem röhrenförmigen Gehäuse (13) mit einer durchsichtigen Abdeckung (16) an einem distalen Ende, und nahe des distalen Endes ein äußeres röhrenförmiges Gehäuse (14), das einen Ring von LEDs (12) umgibt, und eine ringförmige Abdeckung (15), die ein Feld von Emissionen aufweist, das das distale röhrenförmige Gehäuse (13) umgibt, ohne auf die durchsichtige Abdeckung (16) des Objektivs zu fallen, umfasst.

3. Line-Clearance-System nach Anspruch 2, wobei die LEDs auf ein modulares ringförmiges Substrat montiert sind, die durch Entfernen des äußeren röhrenförmigen Gehäuses (14) und Einsetzen der LEDs mit einer anderen Charakteristik für einen anderen Platz an einer Linie ersetzt werden können.

4. Line-Clearance-System nach Ansprüchen 2 oder 3, wobei das Material der Gehäuse Metall und das Material der Abdeckungen Glas ist.

5. Line-Clearance-System nach einem der vorangehenden Ansprüche, wobei jede Kamera durch ein einzelnes Kabel (22) mit sowohl Signal-/Datenleitungen (27) als auch Stromleitungen (26) versorgt wird.

6. Line-Clearance-System nach Anspruch 5, wobei die Signalleitungen sich in einer Anordnung nach einem Industriestandard wie etwa Ethernet befinden und die Stromleitungen im selben Kabelmantel eingeschlossen und an einen Anschlussblock (28) separat von Ports (290) für die Signal-/Datenleitungen gekoppelt sind.

7. Line-Clearance-System nach einem der vorangehenden Ansprüche, wobei die Mikroservices Bildspeichervolumen-Mikroservices (104), die ein geteiltes Clustervolumen zum Speichern und Abrufen von binären Dateien implementieren, und verteilte Cache-Mikroservices (110) einschließen, die ein geteiltes Schlüsselspeichercache zur Benutzung in Clusterparallelalgorithmen-Orchestrierung bereitstellen.

8. Line-Clearance-System nach einem der vorangehenden Ansprüche, wobei die Mikroservices Einzelbilderfassungsdienst-Mikroservices (115) einschließen, von denen mindestens einige Seitenwagenkameras (11) zugeordnet sind, mindestens einige in einem allgemeinen Pool für Einzelbilderfassung auf Anforderung von den Kameras oder begrenzt auf ihr Netzwerkverkehr-Nachbarschaftssegment sind, und einen Pool von Algorithmusagenten einschließen, die gemeinsam große und hochvolumige parallele Arbeitsabläufe von Algorithmusschritten auf Anforderung bearbeiten können.

9. Line-Clearance-System nach einem der vorangehenden Ansprüche, wobei der Prozessor konfiguriert ist, eine anfängliche Inspektion eines Live-Eingabebildes mit einer Reihe von gespeicherten Referenzbildern durchzuführen und eine anfängliche Bestimmung auf der Basis von Konturschwellenvergleichen mit den Referenzbildern zu erstellen, um zu bestimmen, ob das Live-Eingabebild dadurch bestätigt wird, dass es dasselbe wie ein Referenzbild ist, ob es verworfen wird wegen der Anwesenheit eines abnormalen Objekts, unsicher ist wegen möglicher Kamerabewegung, und im letzteren Fall dann Folgendes durchzuführen, um eine Bestätigungs- oder Verwurfsentscheidung nach Neuausrichten/Verzerren des Live-Eingabebildes zu treffen:
a. Konvertieren einer Mehrzahl von Referenzbildern in Grautöne (501) und für jedes Bild Erkennen von Schlüsselpunkten und -deskriptoren (502);
b. Empfangen einer Mehrzahl von Live-Eingabebildern von mindestens einer der Kameras und Konvertieren jedes Bildes in Grautöne (504) und Erkennen von Schlüsselpunkten und assoziierten Deskriptoren vom Eingabebild (505);
c. für jedes Eingabebild Berechnen (506, 507, 508, 509) eines Abstandes zwischen Schlüsselpunkten des Eingabebildes und des Referenzbildes, um die Schlüsselpunkte einander zuzuordnen;
d. Erzeugen (510) einer Homographiematrix von zugeordneten Schlüsselpunkten, und Benutzen (511) der Matrix, um die Schlüsselpunkte des Eingabebildes auf dieselben Koordinaten wie die Schlüsselpunkte des Referenzbildes zu verzerren;
e. Ausführen eines Konturfindungsprogramms, um Polygonkoordinaten (419, 516) für die verzerrte Bildgrenzenform zu erhalten, um einen verzerrten Bildrand (517 und 518) bereitzustellen, in dem eine Kontur eine Reihe zusammenhängender Pixels ist, die eine ähnliche Farbcharakteristik aufweisen;
f. Berechnen einer Gesamtszenenbewegungsproportion (519) unter Verwendung der gesamten Pixelfläche, die sich nicht außerhalb des verzerrten Randes befindet, und automatischer Verwerfung eines Eingabebildes, das von einer Kamera aufgenommen wurde, die beurteilt wird, sich übermäßig bewegt zu haben;
g. für Eingabebilder, die nicht verworfen werden, Erzeugen eines blanken Canvas (520) und Benutzen der verzerrten Bildumrandung als eine Maske angewandt auf das blanke Canvas (521), und Auffinden von Punkten, die am dichtesten zu Extrempunkten der Umrandung (522) liegen, und Berechnen eines Bewegungsproportionswertes (523 bis 526) für jeden Punkt;
h. Erzeugen eines frischen blanken Canvas (528) und Verwenden der verzerrten Randform als eine Maske, um eine verlässliche Form aus dem Referenzbild auszuschneiden (529) und auf das frische blanke Canvas aufzutragen;
i. Erzeugen (531) zweier neuer blanker Canvas für die neuen maskierten Eingabe- und Referenzbilder;
j. Verwenden (532) eines benutzerdefinierten Polygons als eine Maske, um eine verlässliche Form aus dem Referenzbild auszuschneiden und auf einem der blanken Canvas aufzutragen, um einen schwarzen Hintergrund mit dem verzerrten Eingabebild darin sichtbar bereitzustellen, um ein frisches Eingabebild bereitzustellen, und Verwenden (533) eines benutzerdefinierten Polygons als eine Maske, um eine verlässliche Form aus dem Referenzbild auszuschneiden und auf einem der blanken Canvas aufzutragen, um einen schwarzen Hintergrund mit dem Referenzbild darin sichtbar bereitzustellen, um ein frisches Referenzbild bereitzustellen;
k. Verwenden (534) eines Polygonfüllprogramms zum Zeichnen von schwarzen Formen auf dem Eingabebild, wo benutzerdefinierte Ausschnittmasken erforderlich sind, und Verwenden (535) des Polygonfüllprogramms zum Zeichnen von schwarzen Formen auf dem Referenzbild, wo benutzerdefinierte Ausschnittmasken erforderlich sind;
l. Berechnen (537) eines gewichteten Mittelwertbildes unter Verwendung von mehreren Durchgängen von gaußscher Weichzeichnung und Pixelmultiplikation, und Vergleichen (538) von Luminanz und Kontrast (539) zwischen den gewichteten Mittelwertbildern, und Produzieren eines Differenzbildes (543) der Differenz zwischen jedem Pixelfarbwert zwischen den Eingabe- und Referenzbildern, und Verwenden (544) des Differenzbildes zum Hervorfiltern von extremen Pixelwertdifferenzen und Bereitstellen einer binären Repräsentation der Pixeldifferenzen; und
m. Analysieren der Pixeldifferenzen (545 bis 553) zum Bestimmen, ob das Eingabebild ein unerlaubtes Line-Clearance-Ereignis repräsentiert.

10. Line-Clearance-System nach Anspruch 9, wobei auf Schritt (d) ein Schritt (d1) des Binärisierens des verzerrten Bildes (513) und Berechnen eines Strukturelementes (514) zur Weitergabe an eine Erosionsfunktion folgt, die das mit Kanten von Formen im verzerrten Bild assoziierte Rauschen reduziert.

11. Line-Clearance-System nach Ansprüchen 9 oder 10, wobei der Schritt (h) weiterhin einen Schritt (h1) einschließt, in dem eine gaußsche Weichzeichnung (530) sowohl der Referenz- als auch der Eingabebilder durchgeführt wird, um kleine Mengen von Rauschen, die im Bild vorhanden sein können, zu entfernen und auch die Auswirkung von geringen Beleuchtungsänderungen zu dämpfen.

12. Line-Clearance-System nach einem der Ansprüche 9 bis 11, wobei der Schritt (l) Erzeugen (544) einer binären Repräsentation der Pixeldifferenzen mit Anwendung einer Schwelle, die die Inspektion gegen geringe Variationen in der Beleuchtung oder Schattierung unempfindlicher macht, einschließt.

13. Line-Clearance-System nach Anspruch 12, wobei der Schritt (m) Folgendes einschließt: Lokalisieren (545) von Konturen über die binäre Repräsentation hin und für jede zusammenhängende Form, die durch nicht-schwarze Pixel definiert ist, Zeichnen einer Kontur um die Form herum zum Bestimmen der Fläche innerhalb der Form und zum Entfernen solcher Defekte, die zu klein sind, um für den Benutzer als relevant betrachtet zu werden; und Herausfiltern (546) der kleinsten Konturen und Sortieren der Liste von Konturen nach ihrer Fläche in absteigender Ordnung und Entfernen der kleinsten Defektbereiche, um die Sensitivität der Inspektion zu reduzieren, und Berechnen (547) der Fläche jeder Kontur; und Herausfiltern von Konturen (552), die eine Fläche kleiner als eine minimale Proportion im Vergleich zur gesamten Bildgröße haben, oder auf der Basis von Breiten- und Höhenrestriktionen nicht qualifizieren, und Anwenden eines Bereichs von Schwellen zum Eliminieren jeglicher Konturen, die zu schmal, zu kurz, zu breit, zu hoch oder oberhalb oder unterhalb einer spezifischen Fläche sind, um beim Sicherstellen, dass Kantendefekte in der Bildbearbeitung entfernt werden können und dass der Inspektionsprozess unempfindlicher gemacht wird, zu unterstützen; und (553) wenn Kamerabewegung in irgendeiner Richtung größer als eine Szenenbewegungsschwelle ist oder wenn irgendeine Kontur qualifiziert ist, wird das Bild verworfen, andernfalls wird es bestätigt.

14. Line-Clearance-System nach Anspruch 13, wobei Schritt (m) Folgendes einschließt: Vor der Berechnung der Fläche jeder Kontur, Durchführen einer Glättung jeder Kontur, um einen Perimeterbogen der Kontur zu berechnen, Berechnen eines sensiblen Epsilonwertes, um glatte Konturen zu zeichnen, wenn die berechneten Punkte aufgetragen werden, und Erzeugen einer angenäherten geglätteten Kontur auf der Basis des Epsilonwertes, um eine neue Kontur auf der Basis der durchgeführten Glättung bereitzustellen.

15. Line-Clearance-System nach einem der vorangehenden Ansprüche, wobei die Kameras in mindestens einem Cluster (5) gelinkt mit einem Switch (3) und von dort gelinkt mit einem Server (10), der die digitalen Datenprozessoren enthält, verbunden sind.

## Revendications

1. Système de vide de ligne (1) comprenant une pluralité de caméras (4, 11), des moyens destinés à monter les caméras au niveau d'emplacements stratégiques d'une ligne de production, et un processeur de données numérique (10) configuré pour traiter des images provenant des caméras selon des algorithmes pour générer une sortie indiquant le statut de vide de ligne, dans lequel les processeurs sont configurés pour :
mettre en oeuvre un processus d'inspection pour chaque image d'un flux d'images d'entrée en direct acquises par une caméra à l'aide d'une pluralité d'images de référence, dans lequel une sortie de type réussite est fournie pour une image d'entrée en direct si elle correspond à au moins une desdites images de référence,
et une sortie de type échec est fournie si une telle correspondance n'est pas trouvée et un autre processus (413-420) est réalisé pour vérifier à l'aide d'opérations de détection de caractéristiques (413, 414) que l'image d'entrée en direct n'est pas mal alignée et, après réalignement de l'image d'entrée en direct, si aucune
correspondance avec une image de référence n'est trouvée, et dans lequel :
le processeur (10) est configuré pour exécuter un logiciel dans une architecture de microservices,
les microservices comprennent des microservices de service d'authentification (100) mettant en oeuvre une gestion d'utilisateur et une sécurité de sessions d'utilisateur pour une interface d'assistant de vide de ligne, des microservices de service de paramètres (102) fournissant un groupe de paramètres communs pour l'ensemble des microservices, et des microservices de service d'audit (103) pour réaliser des écritures et des lectures de journaux d'audit pour un suivi complet des activités sur le système,
les microservices comprennent des microservices de file d'attente (106) fournissant un système de messagerie entre des microservices, et des microservices de base de données répliquée (101) permettant un accès aisé à une base de données répliquée sur plusieurs noeuds, et
le processeur est adapté pour être lié à un équipement de fabrication pour fournir des signaux de commande pour une prévention automatisée d'une reprise de la production lorsqu'une ligne n'est pas dans un état vide approuvé, et pour automatiser la libération d'une ligne pour le démarrage du lot suivant.

2. Système de vide de ligne selon la revendication 1, dans lequel au moins une caméra comprend une lentille (19) dans un logement tubulaire (13) doté d'un couvercle transparent (16) au niveau d'une extrémité distale, et de manière proximale à ladite extrémité distale, un logement tubulaire externe (14) entourant un anneau de LED (12) et un couvercle annulaire (15) présentant un champ d'émission qui entoure le logement tubulaire distal (13) sans avoir d'incidence sur le couvercle transparent (16) de lentille.

3. Système de vide de ligne selon la revendication 2, dans lequel les LED sont montées sur un substrat annulaire modulaire, remplaçable par retrait du logement tubulaire externe (14) et par insertion des LED d'une caractéristique différente pour un emplacement différent sur une ligne.

4. Système de vide de ligne selon la revendication 2 ou 3, dans lequel le matériau des logements est du métal et le matériau des couvercles est du verre.

5. Système de vide de ligne selon l'une quelconque des revendications précédentes, dans lequel chaque caméra est alimentée par un câble unique (22) doté à la fois d'âmes de signalisation/données (27) et d'âmes de puissance (26).

6. Système de vide de ligne selon la revendication 5, dans lequel les âmes de signalisation sont dans un agencement standard de l'industrie, tel qu'Éthernet, et les âmes de puissance sont comprises dans la même gaine et sont couplées à un bloc de jonction (28) distinct de ports (290) destinés aux âmes de signalisation/données.

7. Système de vide de ligne selon l'une quelconque des revendications précédentes, dans lequel les microservices comprennent des microservices de volume de stockage d'images (104) mettant en oeuvre un volume de cluster partagé pour stocker et récupérer des fichiers binaires, et des microservices de mémoire cache distribuée (110) fournissant une mémoire cache de stockage de clé partagée pour une utilisation dans une orchestration d'algorithmes parallèles de cluster.

8. Système de vide de ligne selon l'une quelconque des revendications précédentes, dans lequel les microservices comprennent des microservices de service de captureur d'image (115) dont au moins certains sont dédiés à des caméras de sidecar (11), au moins certaines étant disponibles dans un groupe général pour une capture d'image à la demande à partir des caméras ou limitées à leur segment de proximité de trafic réseau, et un groupe d'agents algorithmiques qui, ensemble, peuvent traiter à la demande des flux de travaux parallèles de taille importante et de volume élevé d'étapes d'algorithmes.

9. Système de vide de ligne selon l'une quelconque des revendications précédentes, dans lequel le processeur est configuré pour réaliser une inspection initiale d'une image d'entrée en direct avec une série d'images de référence stockées et réaliser une détermination initiale sur la base de comparaisons de seuil de contour avec les images de référence pour déterminer si l'image d'entrée en direct réussit une validation du fait qu'elle est la même qu'une image de référence, si le fait que l'image est rejetée en raison de la présence d'un objet suspect est incertain en raison d'un éventuel mouvement de caméra et en cas de rejet réaliser alors ce qui suit pour prendre la décision de réussite ou d'échec après le réalignement/gauchissement de l'image d'entrée en direct :
a. convertir une pluralité d'images de référence en niveaux de gris (501), et pour chacune détecter des points clés et des descripteurs (502) ;
b. recevoir une pluralité d'images d'entrée en direct à partir d'au moins une desdites caméras et, convertir chaque image d'entrée en niveaux de gris (504) et détecter des points clés et des descripteurs associés à partir de ladite image d'entrée (505) ;
c. pour chaque image d'entrée, calculer (506, 507, 508, 509) une distance entre des points clés d'image d'entrée et d'image de référence pour une mise en correspondant avec lesdits points clés ;
d. générer (510) une matrice d'homographie de points clés mis en correspondance, et utiliser (511) la matrice pour gauchir des points clés d'image d'entrée aux mêmes coordonnées que les points clés d'image de référence ;
e. exécuter un programme de détection de contours pour obtenir des coordonnées de polygone (419, 516) pour la forme de délimitation d'image gauchie pour fournir une bordure d'image gauchie (517 et 518), dans lequel un contour est une série de pixels contigus qui présentent une caractéristique de couleur similaire ;
f. calculer une proportion de mouvement de scène total (519) à l'aide de la surface totale de pixels qui n'est pas en dehors de la bordure gauchie et une déclaration automatique d'échec d'une image d'entrée qui a été prise par une caméra qui est considérée comme ayant bougé de manière excessive ;
g. pour des images d'entrée qui n'ont pas été rejetées, créer une toile vierge (520), et utiliser la délimitation d'image gauchie à titre de masque appliqué à la toile vierge (521), et détecter des points les plus proches des extrémités de la délimitation (522) et calculer pour chacun une valeur de proportion de mouvement (523 à 526) ;
h. créer une nouvelle toile vierge (528) et utiliser la forme de bordure gauchie à titre de masque pour découper (529) une forme fiable à partir de l'image de référence et la coller sur la nouvelle toile vierge ;
i. créer (531) deux nouvelles toiles vierges pour la nouvelle entrée masquée et les images de référence ;
j. utiliser (532) un polygone défini par un utilisateur à titre de masque pour découper une forme fiable à partir de l'image de référence et la coller sur une desdites toiles vierges pour fournir un arrière-plan noir avec l'image d'entrée gauchie visible pour fournir une nouvelle image d'entrée, et utiliser (533) un polygone défini par un utilisateur à titre de masque pour découper une forme fiable à partir de l'image de référence et la coller sur une desdites toiles vierges pour fournir un arrière-plan noir avec l'image de référence visible pour fournir une nouvelle image de référence ;
k. utiliser (534) un programme de remplissage de polygone pour dessiner des formes noires là où des masques de découpage définis par l'utilisateur sont nécessaires, sur l'image d'entrée, et (535) utiliser le programme de remplissage de polygone pour dessiner des formes noires là où des masques de découpage définis par l'utilisateur sont nécessaires, sur l'image de référence ;
l. calculer (537) une image moyenne pondérée à l'aide d'un flou gaussien à multiples passages et en multipliant des pixels, et comparer (538) la luminance et le contraste (539) entre les images moyennes pondérées, et produire une image de différence (543) de la différence entre chaque valeur de couleur de pixel entre les images d'entrée et de référence, et utiliser (544) l'image de différence pour filtrer des différences de valeur de pixel extrêmes et fournir une représentation binaire des différences de pixel ; et
m. analyser lesdites différences de pixel (545 à 553) pour déterminer si l'image d'entrée représente un évènement de vide de ligne non autorisé.

10. Système de vide de ligne selon la revendication 9, dans lequel l'étape (d) est suivie d'une étape (d1) de binarisation de l'image gauchie (513) et de calcul d'un élément structurant (514) à soumettre à une fonction d'érosion qui réduit le bruit associé aux bords de formes dans l'image gauchie.

11. Système de vide de ligne selon l'une quelconque des revendications 9 ou 10, dans lequel ladite étape (h) comprend en outre une étape (h1) de réalisation d'un flou gaussien (530) aussi bien sur les images de référence que d'entrée pour retirer de petites quantités de bruit qui pourraient être présentes dans l'image, ainsi que pour alléger l'impact de subtils changements d'éclairage.

12. Système de vide de ligne selon l'une quelconque des revendications 9 à 11, dans lequel ladite étape (1) comprend une création (544) d'une représentation binaire des différences de pixel avec une application d'un seuil de désensibilisation de l'inspection à des variations mineures de lumière ou d'ombre.

13. Système de vide de ligne selon la revendication 12, dans lequel ladite étape (m) comprend (545) une localisation de contours sur l'ensemble de la représentation binaire et pour chaque forme contiguë définie par des pixels non noirs un dessin d'un contour autour de la forme pour déterminer la surface à l'intérieure de la forme et retirer les défauts qui sont trop petits pour être considérés pertinents pour l'utilisateur ; et un filtrage (546) des contours les plus petits et un ordonnancement de la liste des contours par surface dans un ordre décroissant et un retrait des régions de défauts les plus petites pour réduire la sensibilité de l'inspection, et (547) un calcul de la surface de chaque contour ; et un filtrage de contours (552) qui présentent une surface plus petite qu'une proportion minimum comparée à la taille globale d'image, ou ne sont pas admissibles d'après des restrictions de largeur et de hauteur, et une application d'une plage de seuils pour éliminer tout contour qui serait trop étroit, trop court, trop large, trop grand,
ou qui serait au-dessus ou en dessous d'une zone spécifique pour aider à garantir que des défauts de bords dans le traitement d'image peuvent être retirés, ainsi qu'à garantir une désensibilisation du processus d'inspection ; et (553) si un mouvement de caméra dans n'importe quelle direction est supérieur à un seuil de mouvement de scène ou si un quelconque contour est admissible, alors l'image sera rejetée, autrement elle sera acceptée.

14. Système de vide de ligne selon la revendication 13, dans lequel l'étape (m) comprend, avant un calcul de la surface de chaque contour, une réalisation d'un lissage de chaque contour pour calculer un arc de périmètre du contour, un calcul d'une valeur epsilon raisonnable pour dessiner des contours lisses lors du tracé des points qui ont été calculés, et une génération d'un nouveau contour approximatif lissé sur la base de la valeur epsilon pour fournir un nouveau contour sur la base du lissage réalisé.

15. Système de vide de ligne selon l'une quelconque des revendications précédentes, dans lequel les caméras sont connectées dans au moins un cluster (5) relié à un commutateur (3), à son tour relié à un serveur (10) présentant les processeurs de données numériques.
